(19) Europäisches Patentamt
European Patent Office
Office européen des brevets

(11) **EP 4 049 908 A1**

(12) **EUROPEAN PATENT APPLICATION**
published in accordance with Art. 153(4) EPC

(43) Date of publication:
**31.08.2022 Bulletin 2022/35**

(21) Application number: **20890469.8**

(22) Date of filing: **22.07.2020**

(51) International Patent Classification (IPC):
***B60W 30/06*** (2006.01)      ***B60W 50/08*** (2020.01)

(52) Cooperative Patent Classification (CPC):
**B60W 30/06; B60W 50/08; B60W 60/00**

(86) International application number:
**PCT/CN2020/103389**

(87) International publication number:
**WO 2021/098254 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **20.11.2019  CN 201911141928**

(71) Applicant: **Huawei Technologies Co., Ltd.**
**Shenzhen, Guangdong 518129 (CN)**

(72) Inventors:
• **GAO, Changyu**
**Shenzhen, Guangdong 518129 (CN)**
• **SHEN, Yujie**
**Shenzhen, Guangdong 518129 (CN)**
• **YUAN, Jun**
**Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **AUTOMATIC PARKING INTERACTION METHOD AND DEVICE**

(57)    An automated parking interaction method and apparatus are provided. The method includes: receiving a parking instruction and presenting a parking interaction interface on a display screen in response to the parking instruction; detecting a touch operation performed on the parking interaction interface, so that a vehicle icon moves in the parking interaction interface; obtaining a position of the vehicle icon after the vehicle icon moves in the parking interaction interface; attaching the vehicle icon to a target virtual parking space based on the position of the moved vehicle icon, so that the vehicle icon matches the target virtual parking space; and generating a parking response instruction, so that an automated parking system controls a to-be-parked vehicle to drive into an actually available parking space indicated by the target virtual parking space. According to the automated parking interaction method, interaction experience and convenience of a user in a parking scenario can be improved.

Automated parking interaction method 100

FIG. 2

**EP 4 049 908 A1**

**Description**

**TECHNICAL FIELD**

This application relates to the field of intelligent driving, and in particular, to an automated parking interaction method and apparatus.

**BACKGROUND**

With the commercialization of intelligent vehicles from concept products, increasingly more people do not pay attention only to a conventional mechanical system such as an engine, a chassis, or a gearbox when choosing and purchasing a vehicle, but pay more attention to an intelligent function and intelligent interaction experience.

In reality, a current situation of limited and narrow parking spaces causes people's parking "anxiety" to some extent. How to park more quickly and better has become a relatively large market demand. Therefore, to meet a market requirement for parking, increasingly more manufacturers in the industry have launched many automated parking systems or solutions. Currently, an automated parking system has been a constituent part of an important function of an advanced driver assistant system (Advanced Driver Assistant System, ADAS) or an automated driving system (Automated Driving System, ADS), and is also one of basic functions that are first implemented. Certainly, many separate automated parking systems also appear in the market, and provide upgrade to an automated parking function for a vehicle with no automated parking function in the market.

However, in the field of automated parking technologies, relatively large development is achieved in technology research such as how to identify a parking space and how to plan and control a parking route, but experience of an intelligent vehicle as a commercialized intelligent product in terms of an intelligent interaction function is ignored. Compared with a result of another technology of the automated parking system, the automated parking system is barely satisfactory in terms of intelligent interaction experience.

**SUMMARY**

For a problem in an existing technology that an automated parking system has poor experience in terms of interaction, embodiments of this application provide an automated parking interaction method.

According to a first aspect, an embodiment of this application provides an automated parking interaction method. The automated parking interaction method includes: receiving a parking instruction, and presenting a parking interaction interface on a display screen in response to the parking instruction, where the parking interaction interface includes a vehicle icon indicating a to-be-parked vehicle and a virtual parking space indicating an actually available parking space; detecting a touch operation performed on the parking interaction interface, that is, detecting a touch operation in a touch area that is on the display screen and that corresponds to the parking interaction interface, where the touch operation enables the vehicle icon to move in the parking interaction interface; obtaining a position of the vehicle icon after the vehicle icon moves in the parking interaction interface; attaching the vehicle icon to a target virtual parking space based on the position of the moved vehicle icon, so that the vehicle icon matches the target virtual parking space, where the target virtual parking space is a virtual parking space that is in the parking interaction interface and whose position relationship with the moved vehicle icon meets a preset condition; and generating a parking response instruction, so that an automated parking system controls the to-be-parked vehicle to drive into an actually available parking space indicated by the target virtual parking space. Through the foregoing attaching processing, a process in which a user moves the vehicle icon on the display screen through touching to select a parking space is convenient, attention of the user in a process of matching the vehicle icon with a selected virtual parking space is reduced, and parking space selection efficiency is improved.

In a possible implementation, the detecting a touch operation performed on the parking interaction interface includes: detecting a dragging operation performed on the vehicle icon, that is, detecting a dragging operation on the touch area that is on the display screen and that corresponds to the vehicle icon, where the vehicle icon moves in the parking interaction interface with the dragging operation. The dragging operation is a touch manner with high sense of quality. User experience in a parking space selection scenario is improved by moving the vehicle icon through the dragging operation and then performing attaching processing.

In a possible implementation, the detecting a touch operation performed on the parking interaction interface includes: detecting a touch operation performed on the parking interaction interface, that is, detecting a tapping operation on the touch area that is on the display screen and that corresponds to the parking interaction interface, and moving the vehicle icon to a tapped position of the tapping operation in the parking interaction interface. It is more intuitive and efficient to move the vehicle icon through tapping.

In a possible implementation, after the attaching the vehicle icon to a target virtual parking space based on the position of the moved vehicle icon, the automated parking interaction method further includes: receiving a vehicle head orientation adjustment instruction, and adjusting a vehicle head orientation of the vehicle icon in the target virtual parking space according to the vehicle head orientation adjustment instruction. Different users have different parking habits. Some users prefer to enable the vehicle head to face an outer side of a parking space. Some users prefer to enable the vehicle head to face an inner side of a parking space. A vehicle head adjustment function can provide user-friendly experience.

In a possible implementation, the receiving a vehicle head orientation adjustment instruction includes: detecting a rotation operation performed on the vehicle icon, that is, detecting a rotation operation on the touch area that is on the display screen and that corresponds to the vehicle icon, where the vehicle icon rotates in the parking interaction interface with the rotation operation; obtaining a vehicle posture obtained after the vehicle icon rotates in the parking interaction interface; and adjusting the vehicle head orientation of the vehicle icon in the target virtual parking space based on the vehicle posture.

In a possible implementation, that the vehicle icon matches the target virtual parking space indicates that a central point of the vehicle icon overlaps a central point of the target virtual parking space, and an outline sideline of the vehicle icon is parallel to an outline sideline of the corresponding target virtual parking space.

In a possible implementation, an initial position of the vehicle icon in the parking interaction interface is a preset position, or an initial position of the vehicle icon in the parking interaction interface corresponds to an initial geographical position of the to-be-parked vehicle in an actual environment.

In a possible implementation, a position of the virtual parking space in the parking interaction interface is a preset position, or a position of the virtual parking space in the parking interaction interface corresponds to a geographical position, in the actual environment, of the actually available parking space indicated by the virtual parking space.

In a possible implementation, the parking interaction interface further includes parameter information of the actually available parking space indicated by the virtual parking space. The parameter information may include at least one of the following information: information indicating whether the actually available parking space indicated by the virtual parking space is suitable for parking of the to-be-parked vehicle, whether the actually available parking space indicated by the virtual parking space is an edge parking space, whether there are vehicles parked in parking spaces on both sides of the actually available parking space indicated by the virtual parking space, a type of the actually available parking space indicated by the virtual parking space, size information of the actually available parking space indicated by the virtual parking space, and the like. When related information of an actually available parking space indicated by each virtual parking space is prompted in the parking interaction interface, the user can know a situation of each parking space before selecting a parking space.

In a possible implementation, the parking interaction interface further includes a non-parking area, and the non-parking area is used to indicate an actual geographical area that is not suitable for parking of the to-be-parked vehicle or in which the to-be-parked vehicle cannot be parked in the actual environment. An actual geographical area that is around the to-be-parked vehicle and that is indicated by the non-parking area may include at least one of the following options: an actual parking space in which a vehicle has been parked, an actually available parking space that does not match a size of the to-be-parked vehicle, an actual parking space in which there is an obstacle, a non-parking space area, an obstacle area, and the like.

In a possible implementation, before the generating a parking response instruction, the automated parking interaction method further includes: if the actually available parking space indicated by the target virtual parking space selected by the user is not suitable for parking of the to-be-parked vehicle, indicating the user to re-select the target virtual parking space.

In a possible implementation, before the indicating the user to re-select the target virtual parking space, the automated parking interaction method further includes: determining, based on a size of the vehicle icon and a size of the target virtual parking space, whether the actually available parking space indicated by the target virtual parking space is suitable for parking of the to-be-parked vehicle.

In a possible implementation, before the indicating the user to re-select the target virtual parking space, the automated parking interaction method further includes: determining, based on a size of the to-be-parked vehicle and a size of the actually available parking space indicated by the target virtual parking space, whether the actually available parking space indicated by the target virtual parking space is suitable for parking of the to-be-parked vehicle.

In a possible implementation, the actually available parking space indicated by the virtual parking space included in the parking interaction interface is a parking space obtained after a parking area in the actual environment is divided by the automated parking system.

According to a second aspect, an embodiment of this application provides an automated parking interaction apparatus. The automated parking interaction apparatus includes a receiving module, a display module, a touch detection module, an attaching and adjustment module, and a sending module. The receiving module is configured to receive a parking instruction. The display module is configured to present a parking interaction interface in response to the parking instruction, where the parking interaction interface includes a vehicle icon indicating a to-be-parked vehicle and a virtual parking space indicating an actually available parking space. The touch detection module is configured to: detect a touch operation performed on the parking interaction interface, where the touch operation enables the vehicle icon to move in the parking interaction interface; and obtain a position of the vehicle icon after the vehicle icon moves in the parking interaction interface. The attaching and adjustment module is configured to attach the vehicle icon to a target virtual parking space based on the position of the moved vehicle icon, so that the vehicle icon matches the target virtual parking space, where the target virtual parking space is a virtual parking space that is in the parking interaction interface and whose position relationship with the moved vehicle icon meets a preset condition. The sending module is configured to: generate a parking response instruction, and send the parking response instruction to an automated parking system, so that the automated parking system controls the to-be-parked vehicle to drive into an actually available parking space indicated by the target virtual parking space.

In a possible implementation, the touch detection module is further configured to: detect a rotation operation performed on the vehicle icon, where the vehicle icon rotates in the parking interaction interface with the rotation operation; and obtain a vehicle posture obtained after the vehicle icon rotates in the parking interaction interface; and the attaching and adjustment module is further configured to adjust a vehicle head orientation of the vehicle icon in the target virtual parking space based on the vehicle posture.

In a possible implementation, the automated parking interaction apparatus further includes a prompt module. The prompt module is configured to: if the actually available parking space indicated by the target virtual parking space is not suitable for parking of the to-be-parked vehicle, indicate a user to re-select the target virtual parking space.

In a possible implementation, the prompt module is further configured to determine, based on a size of the vehicle icon and a size of the target virtual parking space, whether the actually available parking space indicated by the target virtual parking space is suitable for parking of the to-be-parked vehicle.

In a possible implementation, the prompt module is further configured to determine, based on a size of the to-be-parked vehicle and a size of the actually available parking space indicated by the target virtual parking space, whether the actually available parking space indicated by the target virtual parking space is suitable for parking of the to-be-parked vehicle.

In a possible implementation, that the vehicle icon matches the target virtual parking space indicates that a central point of the vehicle icon overlaps a central point of the target virtual parking space, and an outline sideline of the vehicle icon is parallel to an outline sideline of the corresponding target virtual parking space.

In a possible implementation, an initial position of the vehicle icon in the parking interaction interface is a preset position, or an initial position of the vehicle icon in the parking interaction interface corresponds to an initial geographical position of the to-be-parked vehicle in an actual environment.

In a possible implementation, a position of the virtual parking space in the parking interaction interface is a preset position, or a position of the virtual parking space in the parking interaction interface corresponds to a geographical position, in the actual environment, of the actually available parking space indicated by the virtual parking space.

In a possible implementation, the parking interaction interface further includes parameter information of the actually available parking space indicated by the virtual parking space.

In a possible implementation, the parking interaction interface further includes a non-parking area, and the non-parking area is used to indicate an actual geographical area that is not suitable for parking of the to-be-parked vehicle or in which the to-be-parked vehicle cannot be parked in the actual environment.

In a possible implementation, the actually available parking space indicated by the virtual parking space included in the parking interaction interface is a parking space obtained after a parking area in the actual environment is divided by the automated parking system.

According to a third aspect, an embodiment of this application provides an automated parking interaction apparatus, including a processor and a memory. The memory stores instructions, and when the instructions stored in the memory are invoked by the processor, the automated parking interaction method described in the first aspect and the possible implementations of the first aspect is performed.

According to a fourth aspect, an embodiment of this application provides a chip, and the chip may implement the automated parking interaction method described in the first aspect and the possible implementations of the first aspect.

According to a fifth aspect, an embodiment of this application provides an automated parking system, and the automated parking system includes the automated parking interaction apparatus described in the second aspect and the possible implementations of the second aspect, the automated parking interaction apparatus described in the third aspect, or the chip described in the fourth aspect.

In a possible implementation, the automated parking system further includes a parking computing module and a control module. The automated parking interaction apparatus is specifically configured to: generate a parking response instruction, and send the parking response instruction to the parking computing module, where the parking response instruction includes information about a target virtual parking space. The parking computing module is configured to: receive the parking response instruction, obtain, according to the parking response instruction, an actually available parking space indicated by the target virtual parking space, and plan a parking path from a current position of a to-be-parked vehicle to the actually available parking space indicated by the target virtual parking space. The control module is configured to control, based on the parking path, the to-be-parked vehicle to park in the actually available parking space indicated by the target virtual parking space.

According to a sixth aspect, an embodiment of this application provides a vehicle, and the vehicle includes the automated parking interaction apparatus described in the second aspect and the possible implementations of the second aspect, the automated parking interaction apparatus described in the third aspect, the chip described in the fourth aspect, or the automated parking system described in the fifth aspect.

When the automated parking interaction method or apparatus provided in the embodiments of this application is applied to the automated parking system, interaction experience of the user in a parking space selection scenario can be improved. The dragging operation and an attaching and adjustment function further improve convenience and operation sense of quality of the user in the parking space selection scenario, show personality, and are simple and aesthetic.

**BRIEF DESCRIPTION OF DRAWINGS**

To describe technical solutions in embodiments of this application more clearly, the following describes the accompanying drawings for describing the embodiments of this application or the background.

FIG. 1 is a schematic diagram of an architecture of an automated parking system according to an embodiment of this application;
FIG. 2 is a flowchart of an automated parking interaction method according to an embodiment of this application;
FIG. 3(a) and FIG. 3(b) are a schematic diagram of a parking interaction interface according to an embodiment of this application;
FIG. 4(a) and FIG. 4(b) are a schematic diagram of another parking interaction interface according to an embodiment of this application;
FIG. 5 is a schematic diagram of a dragging operation in a parking interaction interface according to an embodiment of this application;
FIG. 6 is a schematic diagram of an attaching effect according to an embodiment of this application;
FIG. 7(a) and FIG. 7(b) are a schematic diagram in which a vehicle icon matches a target virtual parking space according to an embodiment of this application;
FIG. 8(a), FIG. 8(b), and FIG. 8(c) are a schematic diagram of a rotation operation in a parking interaction interface according to an embodiment of this application;
FIG. 9 is a schematic diagram of an automated parking interaction apparatus according to an embodiment of this application;
FIG. 10 is a schematic diagram of another automated parking interaction apparatus according to an embodiment of this application;
FIG. 11A and FIG. 11B are a flowchart of an automated parking method according to an embodiment of this application; and
FIG. 12 is a schematic diagram of another automated parking system according to an embodiment of this application.

**DESCRIPTION OF EMBODIMENTS**

To make objectives, technical solutions, and advantages of this application clearer, the following further describes the technical solutions in the embodiments of this application in detail with reference to the accompanying drawings. It is clearly that the described embodiments are merely some but not all of the embodiments of this application. All other embodiments obtained by persons skilled in the art based on the embodiments of this application without creative efforts shall fall within the protection scope of this application.

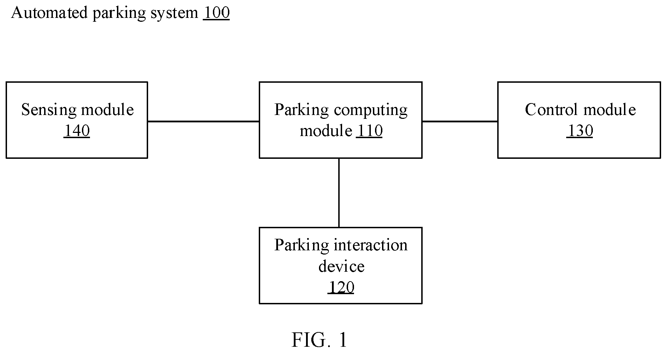

An embodiment of this application provides an architecture of an automated parking system. Refer to FIG. 1. An automated parking system 100 includes a parking computing module 110, a parking interaction device 120, a control module 130, and a sensing module 140. Data communication can be implemented between the parking computing module 110, the parking interaction device 120, the control module 130, and the sensing module 140.

The parking computing module 110 is a brain of the automated parking system 100. A main function of the parking computing module 110 is to process various data related to an automated parking function and is responsible for decision-making and regulation related to the automated parking function. Optionally, the parking computing module 110 may be integrated into an ADAS or an ADS of a vehicle, a parking system, or a vehicle-mounted central processing system; or the parking computing module 110 may be deployed on a cloud device, to implement data communication with the parking interaction device 120, the control module 130, and the sensing module 140 by using a wireless communications technology.

The parking interaction device 120 has a display function, and is configured to display information related to the automated parking function and receive an instruction of a user, and undertakes a main interaction function related to automated parking. Optionally, the parking interaction device 120 may be a vehicle-mounted display system of the vehicle. Optionally, the parking interaction device 120 may be a mobile terminal device such as a smartphone or a tablet computer. In a specific implementation, the parking interaction device 120 may be an interaction system with a display function in an intelligent cabin system of the vehicle, and data communication may be implemented between the intelligent cabin system and the parking computing module 110 by using an in-vehicle communications technology. In another specific implementation, the parking interaction device 120 may be a smartphone of the user, and data communication may be implemented between the smartphone of the user and the parking computing module 110 by using a wired communications technology or a wireless communications technology.

The control module 130 is configured to control an execution device that is on the vehicle and that is related to the automated parking function, such as a steering system, a braking system, or an accelerator, so that a decision-making and regulation result of the parking computing module 110 is effectively executed. Optionally, the control module 130 may include a plurality of controllers that are separately configured to control corresponding execution devices on the vehicle, for example, a steering controller is configured to control the steering system, a brake controller is configured to control the braking system, and an accelerator controller is configured to control the accelerator. Optionally, the control module 130 may alternatively be one or two integrated controllers. One integrated controller may synchronously and/or asynchronously control a plurality of execution devices. For example, one integrated controller dedicated to the automated parking function is configured to control an execution device that is on the vehicle and that is related to the automated parking function.

The sensing module 140 is configured to obtain surrounding environment data of the vehicle, so that the automated parking system 100 can sense a surrounding environment of the vehicle. Optionally, the sensing module 140 may further process the obtained environment data and then transmit the obtained environment data to another module. The sensing module 140 may include one or more sensing devices. The sensing device may be a camera, a millimeter wave radar, a laser radar, or an ultrasonic radar. A quantity of sensing devices included in the sensing module 140 may be properly configured based on a requirement of the automated parking system 100 for implementing the automated parking function. Generally, a larger quantity of sensing devices indicates more information about a surrounding environment of the vehicle, a larger computing amount, and higher costs. The quantity of sensing devices included in the sensing module 140 is not limited in this embodiment of this application.

In a process of implementing the automated parking function, the parking computing module 110, the parking interaction device 120, the control module 130, and the sensing module 140 operate in a coordinated manner. Such coordinated operation is briefly described by using an example: The sensing module 140 obtains the surrounding environment data of the vehicle, and sends the obtained environment data to the parking computing module 110. The parking computing module 110 processes the environment data received from the sensing module 140, to obtain related information of a parking space around the vehicle, and presents, by using the parking interaction device 120, a parking interaction interface that includes the information about the parking space, so that the user selects a parking space that the user wants to park in. The parking interaction device 120 receives an instruction of the user to select a parking space, and notifies the parking computing module 110 of the parking space selected by the user. The parking computing module 110 plans a parking path that enables the vehicle to drive into the parking space selected by the user, and generates a control instruction by using the control module 130, to control an execution device of the vehicle, so that the vehicle drives, based on the parking path, into the parking space selected by the user.

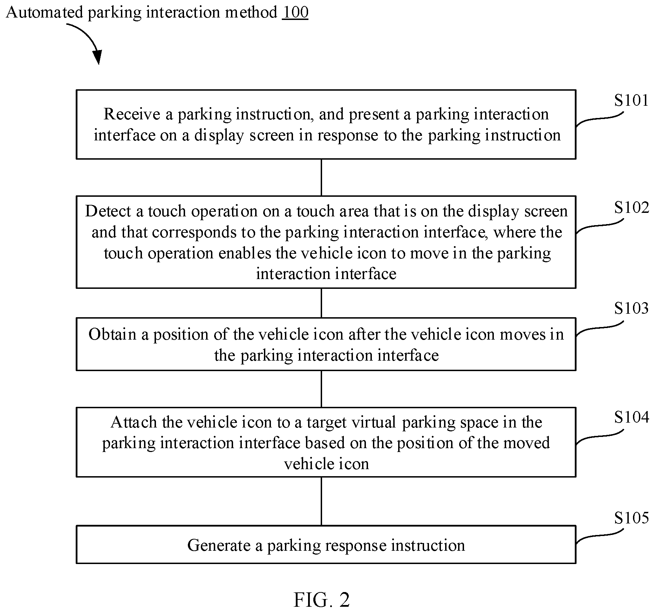

An embodiment of this application provides an automated parking interaction method. Refer to FIG. 2. An automated parking interaction method 100 includes the following steps.

S101: Receive a parking instruction, and present a parking interaction interface on a display screen in response to the parking instruction, where a vehicle icon indicating a to-be-parked vehicle and a virtual parking space indicating an actually available parking space are displayed in the parking interaction interface. The virtual parking space indicating the actually available parking space specifically means that one virtual parking space corresponds to one actually available parking space; in other words, there is a correspondence between each virtual parking space displayed in the parking interaction interface and a real parking space in which a vehicle can be parked in an actual environment. When a virtual parking space is selected, an actually available parking space indicated by the virtual parking space is selected. Similarly, there is a correspondence between the vehicle icon and the to-be-parked vehicle.

Optionally, an initial position of the vehicle icon in the parking interaction interface may be a preset position. The initial position of the vehicle icon in the parking interaction interface may be understood as an initial position of the vehicle icon in the parking interaction interface when the parking interaction interface is presented, that is, a position of the vehicle icon in the parking interaction interface before a user performs a dragging operation. Specifically, the preset position may be set by a factory, or may be set by the user.

Optionally, the initial position of the vehicle icon in the parking interaction interface corresponds to an initial geographical position of the to-be-parked vehicle in the actual environment. The initial geographical position may be understood as a current physical position of the to-be-parked vehicle in the actual environment when automated parking starts.

Optionally, a position of the virtual parking space in the parking interaction interface is a preset position. Specifically, the preset position may be set by a factory, or may be set by the user.

Optionally, the position of the virtual parking space in the parking interaction interface corresponds to a geographical position, in the actual environment, of the actually available parking space indicated by the virtual parking space. In an optional specific implementation, a top-view image generated based on an image collected by a camera configured on the to-be-parked vehicle is displayed in the parking interaction interface. The top-view image presents an image that is of an area centered on the to-be-parked vehicle and that is collected by the camera. A vehicle icon in the top-view image is used to replace the to-be-parked vehicle. The vehicle icon is located at a center of the top-view image. A parking space, namely, the virtual parking space, around the to-be-parked vehicle may be identified by using the top-view image. If the area centered on the to-be-parked vehicle is a square area of 16 m × 16 m, and each pixel of the top-view image represents 2 cm, a size of the top-view image in the parking interaction interface is 800 × 800 pixels. A method for generating the top-view image is not limited in this embodiment of this application. Optionally, the top-view image is generated in a manner of performing inverse perspective mapping on the image collected by the camera configured on the to-be-parked vehicle, and a collecting area of the camera configured on the to-be-parked vehicle may cover a ground around the to-be-parked vehicle in 360 degrees.

In an example of generating the top-view image, four fisheye cameras are deployed above a front bumper, above a rear bumper, on a lower edge of a left rear-view mirror, and on a lower edge of a right rear-view mirror. An angle of view of the fisheye camera is 190 degrees in a horizontal direction and 70 degrees in a longitudinal direction, and the fisheye camera faces an outer side of the to-be-parked vehicle. Images collected by the four fisheye cameras are respectively projected into sectors at a front side, a rear side, a left side, and a right side of the vehicle icon in the top-view image through inverse perspective mapping; in other words, the top-view image is generated. A key to generating the top-view image of the to-be-parked vehicle is to properly project the image collected by the fisheye camera into the top-view image, and this is completed through inverse perspective mapping. A projection matrix of the camera is P = K[R|T], where K is an intrinsic parameter matrix of the camera, and [R|T] is an extrinsic parameter matrix of the camera. An intrinsic parameter and an extrinsic parameter are obtained through parameter calibration measurement. A point A in a vehicle body coordinate system may be converted into a point B in a camera coordinate system by using a projection matrix, that is:

B = PA.

An origin of the vehicle body coordinate system is located at a projection point of a central point of a rear axle of the to-be-parked vehicle on the ground. A vehicle head orientation is a positive direction of an x-axis, and a left direction of the to-be-parked vehicle is a positive direction of a y-axis. It is assumed that each point in the image is on the ground, and the ground is flat. In this case, an upper left corner of the image is an origin of pixel coordinates. Coordinates (x, y, 0), in the vehicle body coordinate system, of a pixel p (u, v) in the top-view image may be calculated.

$$x = (400 + (length/2 - rear\_distance)/0.02 - v) \times 0.02$$

$$y = (400 - u) \times 0.02$$

Pixel coordinates corresponding to the point may be found in an image of a corresponding fisheye camera by using the projection matrix. Inverse perspective mapping can be completed by filling a brightness value of a corresponding point in the fisheye camera into the top-view image. Further, all points in the top-view image are traversed, and inverse perspective mapping is performed on each point, to obtain the top-view image.

Optionally, the parking interaction interface further includes parameter information of the actually available parking space indicated by the virtual parking space, for example, information indicating whether the actually available parking space indicated by the virtual parking space is suitable for parking of the to-be-parked vehicle, whether the actually available parking space indicated by the virtual parking space is an edge parking space, and whether there are vehicles parked in parking spaces on both sides of the actually available parking space indicated by the virtual parking space. The parameter information may be used to notify the user of information about a related parking space, and is used as a reference when the user selects a parking space to park in. The parameter information may be descriptions in a manner such as text, a number, a symbol, color, or a pattern, and a specific description manner is not limited.

Optionally, the parking interaction interface further includes a non-parking area, and an actual geographical area that is in the actual environment and that is indicated by the non-parking area is an area in which the to-be-parked vehicle cannot be parked or that is not suitable for parking of the to-be-parked vehicle. Optionally, the actual geographical area indicated by the non-parking area may include at least one of the following options: an actual parking space in which a vehicle has been parked, an actually available parking space that does not match a size of the to-be-parked vehicle, an actual parking space in which there is an obstacle, and a non-parking space area. Optionally, the virtual parking space and the non-parking area may be identified in the parking interaction interface by the user through text descriptions, a symbol, a number, color, and the like. For example, the non-parking area is displayed in gray. Setting of a position of the non-parking area in the parking interaction interface is consistent with setting of the position of the virtual parking space in the parking interaction interface. Optionally, the automated parking interaction method 100 further includes: if the user drags the vehicle icon to the non-parking area by using a dragging operation, notifying the user that the area is not suitable for parking or does not allow parking, and/or skipping attaching the vehicle icon to the non-parking area, and further, restoring the vehicle icon to the initial position of the vehicle icon in the parking interaction interface.

Two examples of the parking interaction interface are provided in this embodiment of this application.

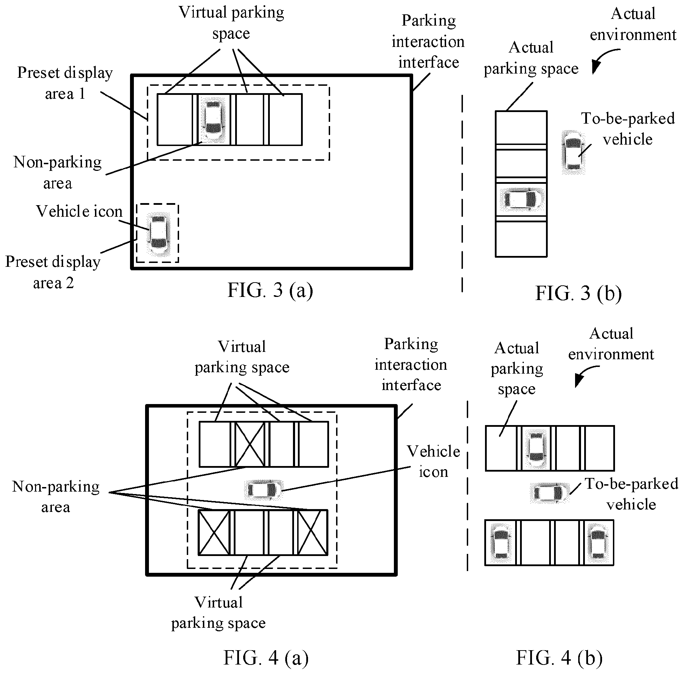

Example 1: As shown in FIG. 3(a) and FIG. 3(b), FIG. 3(a) is a schematic diagram of the parking interaction interface, and FIG. 3(b) is a schematic diagram of the actual environment. The virtual parking space and the non-parking area are displayed in a preset display area 1 in the parking interaction interface, and the vehicle icon is initially displayed in a preset display area 2 in the parking interaction interface; in other words, the initial position of the vehicle icon is in the preset display area 2. In the parking interaction interface shown in FIG. 3(a), relative positions of the vehicle icon, the virtual parking space, and the non-parking area in the parking interaction interface are not associated with relative positions of the to-be-parked vehicle and an actual parking space in the actual environment, but the vehicle icon, the virtual parking space, and the non-parking area are displayed in the preset display area 1 according to a preset sorting rule. In this embodiment of this application, a second virtual parking space on a left side in the parking interaction interface shown in FIG. 3(a) indicates a second actual parking space on a lower side in FIG. 3(b). As shown in FIG. 3(b), a vehicle has been parked in the actual parking space. Therefore, in FIG. 3(a), the vehicle is displayed in the second virtual parking space on the left side to indicate that the second virtual parking space on the left side is a non-parking area. In actual implementation, another manner may alternatively be used to indicate the non-parking area, for example, a manner described in the following example 2. Optionally, when a display area of the virtual parking space in the parking interaction interface is a preset position, the non-parking area may not be displayed. In other words, in an example in FIG. 3(a) and FIG. 3(b), the second virtual parking space on the left side is not displayed, and other three virtual parking spaces indicating actually available parking spaces are displayed.

Example 2: As shown in FIG. 4(a) and FIG. 4(b), FIG. 4(a) is a schematic diagram of the parking interaction interface, and FIG. 4(b) is a schematic diagram of the actual environment. As shown in FIG. 4(a) and FIG. 4(b), relative positions of a vehicle icon in FIG. 4(a), a virtual parking space, and a non-parking area in the parking interaction interface are consistent with relative positions of a to-be-parked vehicle in FIG. 4(b) and an actual parking space in the actual environment. A second virtual parking space on a left side of an upper part in FIG. 4(a) indicates a second actual parking space on a left side in FIG. 4(b). A first virtual parking space on a left side of a lower part in FIG. 4(a) indicates a first actual parking space on a left side of a lower part in FIG. 4(b). A first virtual parking space on a right side of the lower part in FIG. 4(a) indicates a first actual parking space on a right side of the lower part in FIG. 4(b). Because vehicles have been parked in the second actual parking space on the left side in FIG. 4(b), the first actual parking space on the left side of the lower part in FIG. 4(b), and the first actual parking space on the right side of the lower part in FIG. 4(b), the first virtual parking space on the left side of the lower part in FIG. 4(a), the first virtual parking space on the right side of the lower part in FIG. 4(a), and the first virtual parking space on the right side of the lower part in FIG. 4(a) are non-parking areas in the parking interaction interface.

Optionally, the presenting a parking interaction interface on a display screen in response to the parking instruction in step S101 specifically includes: obtaining information about an actual parking space around the to-be-parked vehicle; and displaying the virtual parking space in the parking interaction interface based on the obtained information about the actual parking space, so that the virtual parking space displayed in the parking interaction interface can correspond to the actual parking space around the to-be-parked vehicle.

S102: Detect a touch operation on a touch area that is on the display screen and that corresponds to the parking interaction interface, where the touch operation enables the vehicle icon to move in the parking interaction interface.

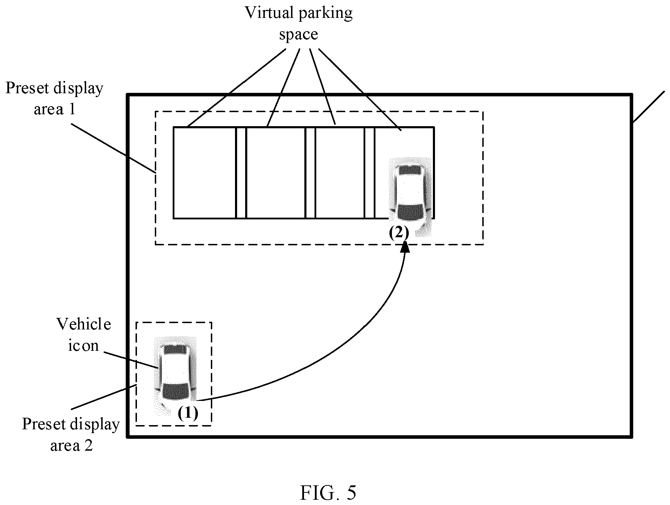

Optionally, a dragging operation on the touch area on the display screen corresponding to the parking interaction interface is detected, and the vehicle icon moves in the parking interaction interface with the dragging operation. An interaction interface shown in FIG. 5 is used as an example. Refer to FIG. 5. It is detected that the user stops the dragging operation after dragging a vehicle icon in a preset display area 2 from a position (1) to a position (2); in other words, the position (2) is a position of the vehicle icon after the vehicle icon moves in the parking interaction interface.

Optionally, a tapping operation on the touch area that is on the display screen and that corresponds to the parking interaction interface is detected, and the vehicle icon is moved to a tapped position of the tapping operation.

S103: Obtain a position of the vehicle icon after the vehicle icon moves in the parking interaction interface. Refer to FIG. 5. Position information of the vehicle icon at the position (2) is obtained.

S104: Attach the vehicle icon to a target virtual parking space in the parking interaction interface based on the position of the moved vehicle icon, where a function of attaching processing can enable the vehicle icon to match the target virtual parking space in the parking interaction interface, and the target virtual parking space is a virtual parking space that is in the parking interaction interface and whose position relationship with the moved vehicle icon meets a preset condition. Optionally, after the attaching processing, feeding back may be performed through voice or vibration. Further, the user may be indicated to adjust a vehicle head orientation of the vehicle icon. A vehicle head orientation of the vehicle icon in the parking interaction interface represents a vehicle head orientation of the to-be-parked vehicle in the actual parking space after automated parking is completed.

Optionally, the target virtual parking space is determined based on a position relationship between the moved vehicle icon and the virtual parking space in the parking interaction interface. Specifically, the target virtual parking space is determined based on a straight-line distance between a central point of the moved vehicle icon and a central point of the virtual parking space. In other words, a virtual parking space that is in the parking interaction interface and whose central point has a shortest straight-line distance from the central point of the moved vehicle icon is used as the target virtual parking space. Certainly, a straight-line distance between the central point of the vehicle icon and the central point of the target virtual parking space cannot be greater than a specific threshold, to avoid a case in which user experience is reduced because the vehicle icon is attached to the virtual parking space due to invalid dragging of the user. Optionally, during determining of the target virtual parking space, an included angle between the vehicle icon and the virtual parking space may be further taken into consideration.

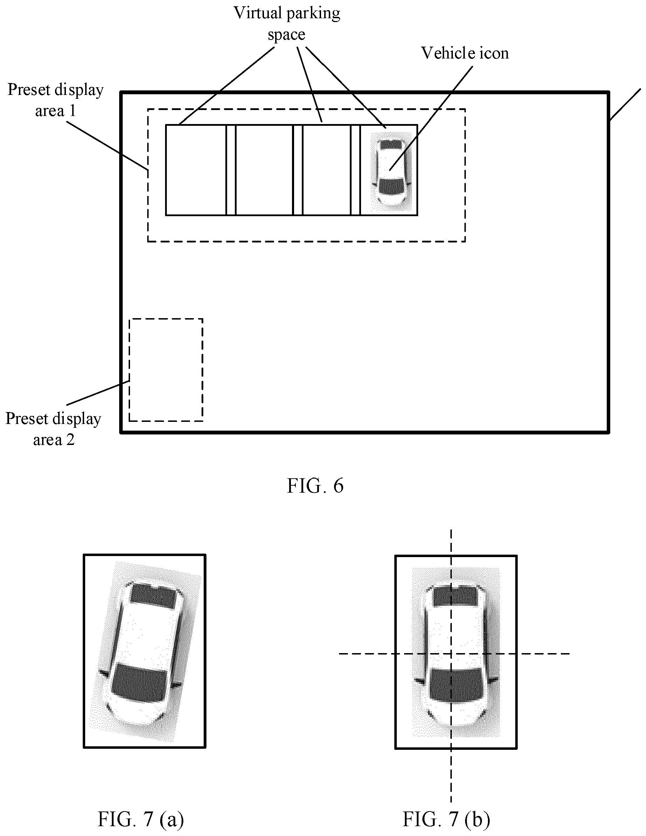

In an instance, as shown in FIG. 5, the moved vehicle icon is located at a position (2) in the parking interaction interface, and is the closest to a rightmost virtual parking space; in other words, a straight-line distance between a central point of the moved vehicle icon and a central point of the rightmost virtual parking space in the parking interaction interface is the shortest. Therefore, the rightmost virtual parking space in the parking interaction interface is the target virtual parking space. Then, the vehicle icon is attached to the rightmost virtual parking space in the parking interaction interface. For an effect achieved after attaching, refer to FIG. 6.

In this embodiment of this application, the vehicle icon indicates a to-be-parked vehicle, and the virtual parking space indicates an actually available parking space around the to-be-parked vehicle. Optionally, a size of the vehicle icon also represents a size of the to-be-parked vehicle, and a size of the virtual parking space also represents a size of the actually available parking space. That the vehicle icon matches the target virtual parking space may be understood as: The vehicle icon is enabled to fall within the target virtual parking space. As shown in FIG. 7(a) and FIG. 7(b), correspondingly, it indicates that the to-be-parked vehicle can be parked in the actually available parking space after automated parking is completed. Further, that the vehicle icon matches the target virtual parking space may be understood as: The central point of the vehicle icon overlaps the central point of the target virtual parking space, and an outline sideline of the vehicle icon is parallel to an outline sideline of the corresponding target virtual parking space, as shown in FIG. 7(b).

A beneficial effect of the attaching processing in step S104 is as follows: The target virtual parking space to be selected by the user by using the dragging operation may be quickly determined, and the vehicle icon is stacked on the target virtual parking space to achieve a matching effect, so that the user intuitively senses a "the vehicle has been parked in the parking space" effect from the parking interaction interface before automated parking starts, and a complex process and time in which the user stacks the vehicle icon on the target virtual parking space by using the dragging operation to achieve the matching effect can be reduced. Optionally, a relative relationship between the moved vehicle icon and the target virtual parking space reflects a relative relationship, obtained after automated parking is completed, between the to-be-parked vehicle and the actually available parking space indicated by the target virtual parking space.

Optionally, after the vehicle icon is attached to the target virtual parking space, the user may further be indicated to adjust a vehicle head orientation of the vehicle icon. An orientation, in the target virtual parking space, of a vehicle head of the vehicle icon in the parking interaction interface indicates an orientation, obtained after automated parking is completed, of the to-be-parked vehicle in the actually available parking space indicated by the target virtual parking space. Specifically, after step S104, the automated parking interaction method 100 further includes: receiving a vehicle head orientation adjustment instruction, and adjusting a vehicle head orientation of the vehicle icon in the target virtual parking space according to the vehicle head orientation adjustment instruction.

Optionally, the receiving a vehicle head orientation adjustment instruction includes: detecting a rotation operation in the touch area that is on the display screen and that corresponds to the vehicle icon, where the vehicle icon rotates in the parking interaction interface with the rotation operation; obtaining a vehicle posture obtained after the vehicle icon rotates in the parking interaction interface; and adjusting, based on the vehicle posture, the vehicle head orientation of the vehicle icon in the target virtual parking space. Optionally, after the rotation operation performed by the user, when the vehicle icon and the target virtual parking space are no longer in a previously matching state achieved after attaching, the vehicle icon may be attached to the target virtual parking space again.

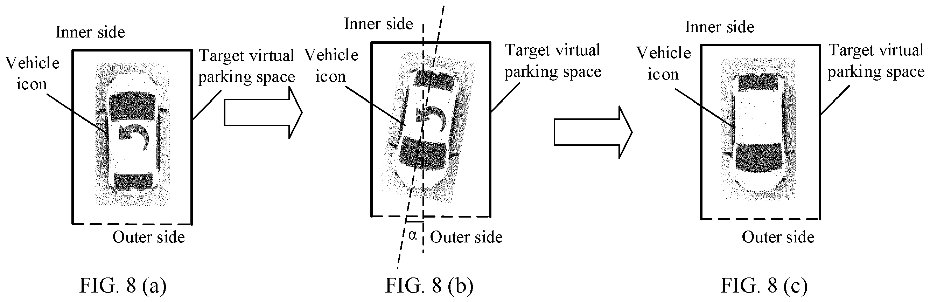

Optionally, the adjusting, based on the vehicle posture, the vehicle head orientation of the vehicle icon in the target virtual parking space includes: The vehicle head orientation of the vehicle icon in the target virtual parking space may be adjusted based on an included angle between a longitudinal central axis of the rotated vehicle icon and a longitudinal central axis of the virtual parking space. Refer to FIG. 8(a), FIG. 8(b), and FIG. 8(c). A vehicle posture obtained after the user rotates a vehicle icon in FIG. 8(a) counterclockwise to a vehicle icon in FIG. 8(b) is detected.

Optionally, whether a vehicle head of the vehicle icon is close to an outer side or an inner side of a target virtual parking space is determined based on a minimum included angle $\alpha$ (namely, an acute angle) between a central axis of a vehicle head end of a longitudinal central axis of the rotated vehicle icon and a central axis of a virtual parking space. In this embodiment of this application, the outer side of the virtual parking space is an entrance side of the parking space, and correspondingly, the inner side of the virtual parking space is an opposite side (that is, the bottom of the parking space) of the entrance side of the parking space. As shown in FIG. 8(b), the included angle $\alpha$ is an angle between a central axis of an outer end of a longitudinal central axis of the target virtual parking space and a central axis of a vehicle head end of the longitudinal central axis of the vehicle icon, or a central axis of a vehicle head end of the longitudinal central axis of the vehicle icon is close to an outer side of the target virtual parking space. After a rotation operation shown in FIG. 8(a), FIG. 8(b), and FIG. 8(c) is detected, the vehicle head orientation of the vehicle icon shown in FIG. 8(a) is adjusted to a case, shown in FIG. 8(c), in which the vehicle head faces outwards. This also indicates that a vehicle head orientation of the to-be-parked vehicle in the actual parking space after automated parking is that the vehicle head faces outwards.

Optionally, the receiving a vehicle head orientation adjustment instruction includes: detecting a touch operation on a vehicle head outward virtual key or a vehicle head inward virtual key in the parking interaction interface, and adjusting a vehicle head orientation of the vehicle icon in a target virtual parking space based on the detected touch operation. For example, a current vehicle head orientation of the vehicle icon in the target virtual parking space is that the vehicle head faces an inner side of the target virtual parking space (that is, an entrance side of a non-parking space). When it is detected that the user touches the vehicle head outward virtual key in the parking interaction interface, the vehicle head of the vehicle icon in the target virtual parking space is adjusted from a state in which the vehicle head faces the inner side of the target virtual parking space to a state in which the vehicle head faces the outer side of the target virtual parking space (that is, an entrance side of the parking space).

S105: Generate a parking response instruction, where the parking response instruction enables an automated parking system to control the to-be-parked vehicle to drive into an actually available parking space indicated by the target virtual parking space. Specifically, the parking response instruction may include information about the target virtual parking space or information about the actually available parking space indicated by the target virtual parking space, to notify the automated parking system of the virtual parking space selected by the user or a target actually available parking space (the actually available parking space indicated by the target virtual parking space), so that the automated parking system can control the to-be-parked vehicle to drive into an actually available parking space corresponding to the virtual parking space selected by the user.

Optionally, before step S105, the automated parking interaction method 100 further includes: determining whether the actually available parking space indicated by the target virtual parking space is suitable for parking of the to-be-parked vehicle; and if the actually available parking space indicated by the target virtual parking space is suitable for parking of the to-be-parked vehicle, indicating the user to drive into the actually available parking space indicated by the target virtual parking space, or directly performing step S105 without notifying the user; or if the actually available parking space indicated by the target virtual parking space is not suitable for parking of the to-be-parked vehicle, indicating that the actually available parking space indicated by the target virtual parking space is not suitable for parking of the to-be-parked vehicle, and indicating the user to re-select the target virtual parking space by using the dragging operation. When the user needs to re-select the target virtual parking space, optionally, the vehicle icon returns to a position before the dragging operation, that is, the initial position of the vehicle icon in the parking interaction interface. Optionally, a position of the vehicle icon in the parking interaction interface does not change, in other words, the vehicle icon is still attached on the currently selected target virtual parking space. After being dragged by the user again, the vehicle icon moves in the parking interaction interface with the dragging operation. Optionally, the user may be notified, in at least one manner in text, voice, color, or vibration, whether the actually available parking space indicated by the target virtual parking space is suitable for parking of the to-be-parked vehicle.

For determining whether the actually available parking space indicated by the target virtual parking space is suitable for parking of the to-be-parked vehicle, in specific implementation, optionally, there are at least two optional manners. In one optional manner, determining is performed by comparing size data of the to-be-parked vehicle with size data of the actually available parking space corresponding to the target virtual parking space. In another optional manner, a size of the vehicle icon and a size of the virtual parking space are in a mapping relationship, in a same proportion in the parking interaction interface, with an actual size of the to-be-parked vehicle and an actual size of the actually available parking space indicated by the virtual parking space; in other words, the size of the vehicle icon in the parking interface represents the size of the to-be-parked vehicle, and a size of the target virtual parking space represents a size of the actually available parking space indicated by the target virtual parking space, and in this way, determining may be directly performed by comparing the size of the vehicle icon and the size of the target virtual parking space. In this condition, the user can also intuitively learn, from the parking interaction interface, whether the size of the actually available parking space indicated by the target virtual parking space is suitable for parking of the to-be-parked vehicle.

Further, the automated parking interaction method 100 further includes: switching the parking interaction interface to a parking real-time image interface, where the parking real-time image interface is used to display an image that is in an automated parking process and that is collected by the to-be-parked vehicle in real time by using a camera. Optionally, parking track information may be further displayed.

Optionally, the automated parking interaction method 100 may be implemented by the parking interaction device 120 described in the embodiment corresponding to FIG. 1. Optionally, the automated parking interaction method 100 may be implemented by a vehicle-mounted display device configured in the to-be-parked vehicle, or may be implemented by a mobile terminal (for example, a mobile phone or a tablet computer).

Optionally, before the presenting a parking interaction interface on a display screen in response to the parking instruction in step S101, the automated parking interaction method 100 further includes: obtaining, by using a sensing device, data of a parking area around the to-be-parked vehicle; and dividing the parking area into a plurality of actually available parking spaces based on data of the parking area and a preset rule. This case is usually that there is no parking space around the to-be-parked vehicle. In the method provided in this embodiment of this application, the parking area around the to-be-parked vehicle may be divided into the plurality of actually available parking spaces based on a constraint condition, instead of parking the to-be-parked vehicle in any selected position/area in the obtained parking area, so that the parking area around the to-be-parked vehicle can be more properly used, and the user can select a desired parking area in a more user-friendly manner from the actually available parking spaces obtained after dividing the parking interaction interface. The constraint condition herein is not limited, and may be a standard parking space size, a parking space form (a vertical parking space or a parallel parking space), or may be obtained by performing division by using a principle of more properly using the parking area, or the like.

When the automated parking interaction method provided in this embodiment of this application is applied to the automated parking system, interaction experience of the user in a parking space selection scenario can be improved. The dragging operation and an attaching and adjustment function further improve convenience and entertainment of the user in the parking space selection scenario.

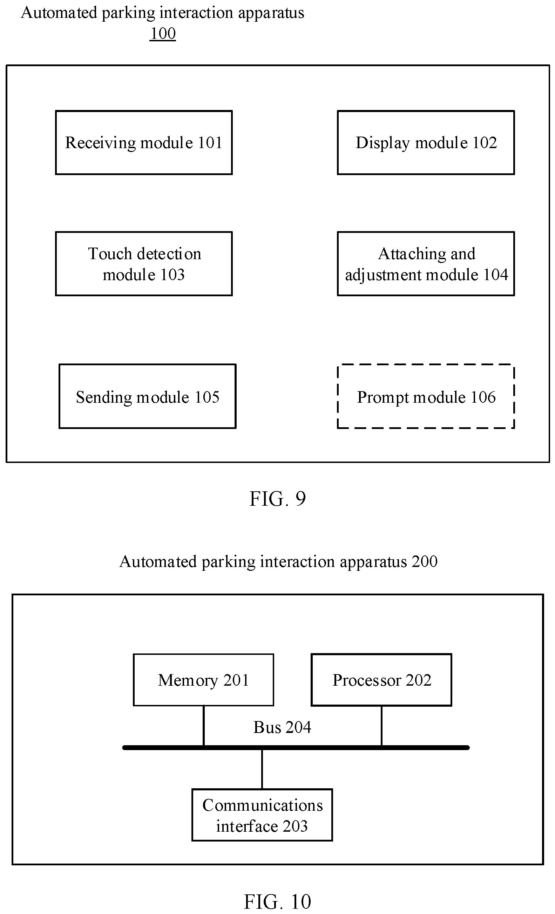

An embodiment of this application provides an automated parking interaction apparatus. Refer to FIG. 9. An automated parking interaction apparatus 100 includes functional modules that can implement the automated parking interaction method 100 described in the embodiment corresponding to FIG. 2. A receiving module 101, a display module 102, a touch detection module 103, an attaching and adjustment module 104, and a sending module 105 that are included in the automated parking interaction apparatus 100 are briefly described below with reference to a structure of the automated parking interaction apparatus 100 shown in FIG. 9.

The receiving module 101 is configured to receive data sent by another device to the automated parking interaction apparatus 100, and is specifically configured to receive a parking instruction.

The display module 102 is configured to display content, and specifically presents a parking interaction interface to a user in response to the parking instruction received by the receiving module 101, where a vehicle icon indicating a to-be-parked vehicle and a virtual parking space indicating an actually available parking space are displayed in the parking interaction interface.

The touch detection module 103 is configured to detect a touch operation on the display module 102 and receive a user instruction, where the touch operation enables the vehicle icon to move in the parking interaction interface. Optionally, the touch detection module 103 is configured to: detect a dragging operation in a touch area that is on a display screen and that corresponds to the vehicle icon in the parking interaction interface, and obtain a position of the vehicle icon after the vehicle icon moves in the parking interaction interface. Optionally, a tapping operation on the touch area that is on the display screen and that corresponds to the parking interaction interface is detected, and the vehicle icon is moved to a tapped position of the tapping operation.

The attaching and adjustment module 104 is configured to attach the vehicle icon to a target virtual parking space in the parking interaction interface based on the position of the moved vehicle icon, where a function of attaching processing can enable the vehicle icon to match the target virtual parking space in the parking interaction interface, and the target virtual parking space is a virtual parking space that is in the parking interaction interface and whose position relationship with the moved vehicle icon meets a preset condition.

The sending module 105 is configured to send data to another device/apparatus, and is specifically configured to: generate a parking response instruction, and send the parking response instruction to an automated parking system, so that the automated parking system controls the to-be-parked vehicle to drive into an actually available parking space indicated by the target virtual parking space.

Optionally, the touch detection module 103 is further configured to detect a touch operation on a vehicle head outward virtual key or a vehicle head inward virtual key in the parking interaction interface, and the attaching and adjustment module 104 is further configured to adjust a vehicle head orientation of the vehicle icon in the target virtual parking space based on the detected touch operation.

Optionally, the touch detection module 103 is further specifically configured to: detect a rotation operation in the touch area that is on the display screen and that corresponds to the vehicle icon, where the vehicle icon rotates in the parking interaction interface with the rotation operation; and obtain a vehicle posture obtained after the vehicle icon rotates in the parking interaction interface. The attaching and adjustment module 104 is further configured to adjust, based on the vehicle posture obtained by the touch detection module 103, the vehicle head orientation of the vehicle icon in the target virtual parking space. Optionally, after the rotation operation performed by the user, the vehicle icon and the target virtual parking space are no longer in a previously attached matching state, and the attaching and adjustment 104 is further configured to attach the vehicle icon to the target virtual parking space again.

Optionally, the automated parking interaction apparatus 100 further includes a prompt module 106. The prompt module 106 is configured to: after the attaching and adjustment module 104 attaches the vehicle icon to the target virtual parking space, indicate, by using text, a pattern, text information, a symbol, voice, or the like, the user to adjust a vehicle head orientation of the vehicle icon. An orientation, in the target virtual parking space, of a vehicle head of the vehicle icon in the parking interaction interface indicates an orientation, obtained after automated parking is completed, of the to-be-parked vehicle in the actually available parking space indicated by the target virtual parking space. The prompt module 106 is further configured to: before the sending module 105 generates the parking response instruction, determine whether the actually available parking space indicated by the target virtual parking space is suitable for parking of the to-be-parked vehicle; and if the actually available parking space indicated by the target virtual parking space is suitable for parking of the to-be-parked vehicle, indicate the user to drive into the actually available parking space indicated by the target virtual parking space; or if the actually available parking space indicated by the target virtual parking space is not suitable for parking of the to-be-parked vehicle, indicate the user to re-select the target virtual parking space by using a dragging operation.

Optionally, the display module 102 is further configured to switch the parking interaction interface to a parking real-time image interface, where the parking real-time image interface is used to display an image that is in an automated parking process and that is collected by the to-be-parked vehicle in real time by using a camera. Optionally, parking track information may be further displayed.

The automated parking interaction apparatus 100 described in the embodiment corresponding to FIG. 9 is an apparatus corresponding to the automated parking interaction method 100 described in the embodiment corresponding to FIG. 2. The automated parking interaction apparatus 100 may implement all steps included in the automated parking interaction method. For related content that is not described in the embodiment corresponding to FIG. 9, refer to related descriptions in the embodiment corresponding to FIG. 2. Details are not described herein again.

An embodiment of this application provides another automated parking interaction apparatus. Refer to FIG. 10. An automated parking interaction apparatus 200 can implement the automated parking interaction method 100 described in the embodiment corresponding to FIG. 2. The automated parking interaction apparatus 200 includes a memory 201, a processor 202, a communications interface 203, and a bus 204. The memory 201, the processor 202, and the communications interface 203 are communicatively connected to each other through the bus 204.

The memory 201 may be a read-only memory, a static storage device, a dynamic storage device, or a random access memory. The memory 201 may store a program. When the program stored in the memory 201 is executed by the processor 202, the processor 202 is configured to perform the automated parking interaction method 100 described in the embodiment of this application corresponding to FIG. 2.

The processor 202 may be a general-purpose central processing unit, a microprocessor, an application-specific integrated circuit, a graphics processing unit (graphics processing unit, GPU), or one or more integrated circuits, and is configured to execute a related program, to implement functions that need to be performed by the units in the signaling analysis apparatus in this embodiment of this application, or perform the image segmentation method in the method embodiments of this application. The processor may implement functions of the modules in FIG. 9.

Alternatively, the processor 202 may be an integrated circuit chip and has a signal processing capability. In an implementation process, the steps of the image segmentation method in this application may be completed by using a hardware integrated logic circuit in the processor 202 or instructions in a form of software. The processor 202 may be a general-purpose processor, a digital signal processing (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The methods, the steps, and logical block diagrams that are disclosed in the embodiments of this application may be implemented or performed. The general-purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 201. The processor 202 reads information in the memory 201, and completes, with reference to hardware (for example, a display screen) of the processor 202, a function that needs to be executed by a module included in the automated parking interaction apparatus 100 in this embodiment of this application, or performs the automated parking interaction method 100 in the method embodiment of this application.

The communications interface 203 uses, for example, but is not limited to, a transceiver apparatus such as a transceiver to implement communication between the automated parking interaction apparatus 200 and another device or communications network. For example, data of an actual parking space around a to-be-parked vehicle may be received by using the communications interface 203.

The bus 204 may include a path for transmitting information between components (for example, the memory 201, the processor 202, and the communications interface 203) of the automated parking interaction apparatus 200.

It should be noted that although the automated parking interaction apparatus 200 shown in FIG. 10 shows only the memory, the processor, and the communications interface, in a specific implementation process, persons skilled in the art should understand that the automated parking interaction apparatus 200 further includes another component required for implementing normal operation. In addition, according to a specific requirement, the persons skilled in the art should understand that the automated parking interaction apparatus 200 may further include a hardware component that implements another additional function. In addition, the persons skilled in the art should understand that the automated parking interaction apparatus 200 may alternatively include only components required for implementing the embodiments of this application, but does not necessarily include all the components shown in FIG. 10.

The automated parking interaction apparatus 100 and the automated parking interaction apparatus 200 described in the embodiments corresponding to FIG. 9 and FIG. 10 may implement functions of the parking interaction device 120 in the automated parking system 100 described in the embodiment corresponding to FIG. 1.

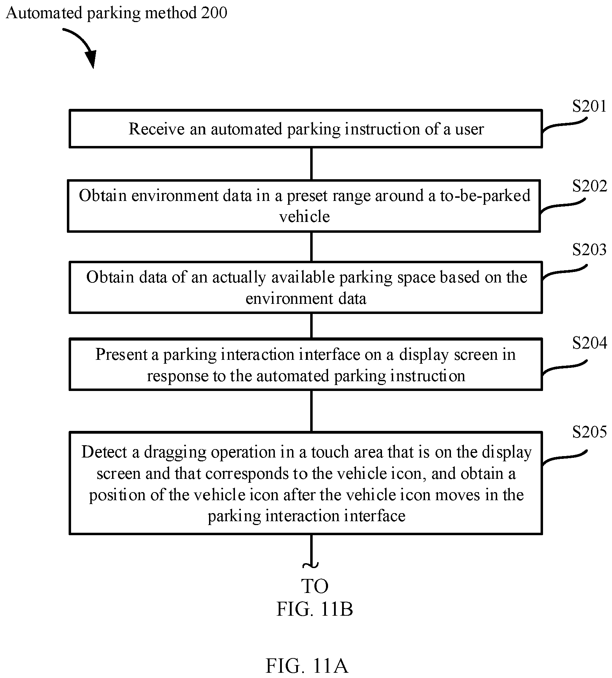

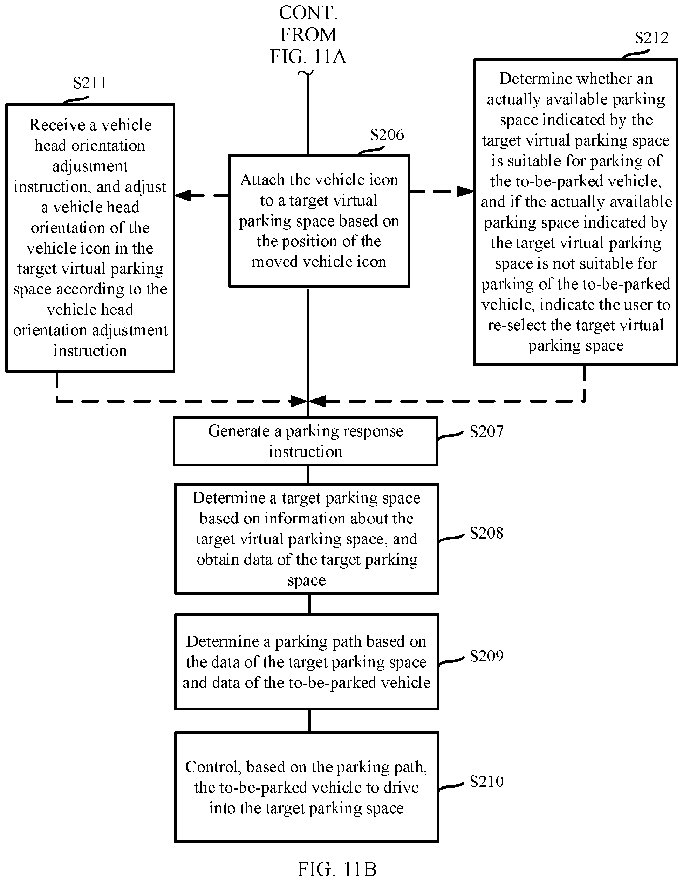

With reference to the foregoing embodiments of this application, an embodiment of this application provides an automated parking method. Refer to FIG. 11A and FIG. 11B. An automated parking method 200 includes the following steps:

S201: Receive an automated parking instruction of a user, for example, the user triggers the automated parking instruction by placing a vehicle gear in a reverse gear.

S202: Obtain environment data in a preset range around a to-be-parked vehicle, for example, obtain the environment data in the preset range around the to-be-parked vehicle by using a sensing device.

S203: Obtain data of an actually available parking space based on the environment data. A specific implementation of step 203 is not limited in this embodiment of this application.

S204: Present a parking interaction interface on a display screen in response to the automated parking instruction, where the parking interaction interface includes a vehicle icon indicating the to-be-parked vehicle and a virtual parking space indicating the actually available parking space.

S205: Detect a dragging operation in a touch area that is on the display screen and that corresponds to the vehicle icon, and obtain a position of the vehicle icon after the vehicle icon moves in the parking interaction interface, where the vehicle icon moves in the parking interaction interface with the dragging operation.

S206: Attach the vehicle icon to a target virtual parking space based on the position of the moved vehicle icon, so that the vehicle icon matches the target virtual parking space, where the target virtual parking space is a virtual parking space that is in the parking interaction interface and whose position relationship with the moved vehicle icon meets a preset condition.

S207: Generate a parking response instruction, where the parking response instruction includes information about the target virtual parking space.

S208: Determine a target parking space based on the information about the target virtual parking space and obtain data of the target parking space, where the target parking space is an actually available parking space indicated by the target virtual parking space.

S209: Determine a parking path based on the data of the target parking space and data of the to-be-parked vehicle, where the parking path is a path that enables the to-be-parked vehicle to park in the target parking space.

S210: Control, based on the parking path, the to-be-parked vehicle to drive into the target parking space. Optionally, the to-be-parked vehicle may be controlled, with reference to a positioning system, to drive into the target parking space. Optionally, the to-be-parked vehicle may be controlled, with reference to a sensing capability of the sensing device, to drive into the target parking space.

Optionally, after step S206 and before step S207, the automated parking method 200 further includes: S211: Receive a vehicle head orientation adjustment instruction, and adjust a vehicle head orientation of the vehicle icon in the target virtual parking space according to the vehicle head orientation adjustment instruction.

Optionally, after step S206 and before step S207, the automated parking method 200 further includes: S212: Determine whether the actually available parking space indicated by the target virtual parking space is suitable for parking of the to-be-parked vehicle, and if the actually available parking space indicated by the target virtual parking space is not suitable for parking of the to-be-parked vehicle, indicate the user to re-select the target virtual parking space.

Optionally, step S203 specifically includes: if it is learned, based on the environment data, that there is no parking space around the to-be-parked vehicle but there is a parking area (for example, an empty area), dividing the parking area into a plurality of actually available parking spaces based on the environment data and a preset rule, and obtaining data of the actually available parking space.

It should be noted that the automated parking method described in the embodiment corresponding to FIG. 11A and FIG. 11B may be understood as follows: The automated parking interaction method 100 described in the embodiment corresponding to FIG. 2 is applied to the automated parking method 200; in other words, the automated parking interaction method 100 and an automated parking planning and controlling method are combined. To avoid excessively redundant descriptions, for descriptions related to the automated parking interaction method 100 (specifically, for S201 and S204 to S207), refer to related descriptions in the embodiment corresponding to FIG. 2. Details are not described herein again. The automated parking system 100 described in the embodiment corresponding to FIG. 1 may implement steps of the automated parking method described in the embodiment corresponding to FIG. 11A and FIG. 11B, including steps of the automated parking interaction method 100 described in the embodiment corresponding to FIG. 2.

An embodiment of this application further provides an automated parking system. The automated parking system includes the automated parking interaction apparatus 100 described in the embodiment corresponding to FIG. 9 or the automated parking interaction apparatus 200 described in the embodiment corresponding to FIG. 10, so that the automated parking interaction method 100 described in the embodiment corresponding to FIG. 2 and the automated parking method 200 described in the embodiment corresponding to FIG. 11A and FIG. 11B can be implemented.

An embodiment of this application further provides a chip, including at least one processor. The at least one processor is coupled to a memory, the memory stores instructions, and when the instructions stored in the memory are executed by the at least one processor, the at least one processor is configured to perform, with reference to related hardware, the automated parking method 200 described in the embodiment corresponding to FIG. 11A and FIG. 11B.

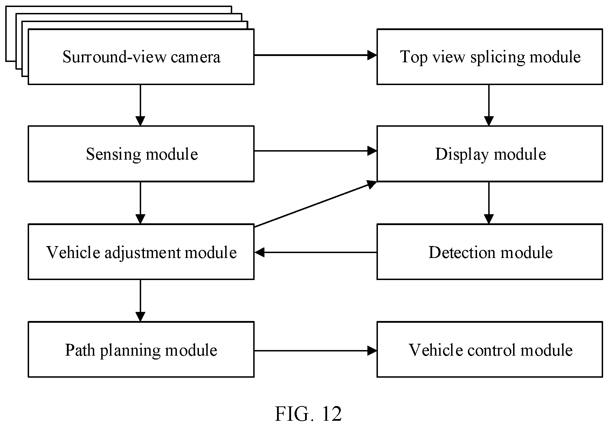

An embodiment of this application further provides an automated parking system. Refer to FIG. 12. The automated parking system includes a surround-view camera, a top view splicing module, a display module, a sensing module, a detection module, a vehicle adjustment module, a path planning module, and a vehicle control module.

The surround-view camera is configured to collect an image of a 360-degree environment around a to-be-parked vehicle.

The top view splicing module is configured to generate a top view of an area around the to-be-parked vehicle through inverse perspective mapping by using the image collected by the surround-view camera. Optionally, the top view of the area around the to-be-parked vehicle is an image centered on the to-be-parked vehicle.

The display module is configured to display a parking interaction interface on a display screen, where the parking interaction interface includes the top view of the area around the to-be-parked vehicle and a vehicle icon indicating the to-be-parked vehicle. The sensing module is configured to sense a target such as a ground marking line in the area around the to-be-parked vehicle and/or sense a driving area around the vehicle.

The detection module is configured to detect a touch operation of a user on the display screen, such as a tapping operation, a dragging operation, or a rotation operation, and is specifically configured to: detect the touch operation of the user on the display screen, and move the vehicle icon to a position at which the touch operation occurs; or detect a touch operation performed by the user on the vehicle icon, and adjust an orientation of the vehicle icon to an orientation specified by the touch operation. Optionally, the touch operation includes a tapping operation on the display screen, and when the user taps the screen, the vehicle icon is moved to a tapped position, and an orientation remains unchanged; or the touch operation includes a dragging operation performed on the vehicle icon, and the vehicle icon moves along a dragging track of a finger; or the touch operation includes a rotation operation performed on the vehicle icon, and an orientation of the vehicle icon moves with a rotation direction.

The vehicle adjustment module is configured to: detect a position and an orientation of the vehicle icon, obtain, as a matching result, a driving area edge or a ground mark line that matches the position and the orientation of the vehicle icon, adaptively adjust the vehicle icon based on the matching result, and generate a virtual parking space based on the position and the orientation of the vehicle icon.

Specifically, the vehicle adjustment module is configured to: when the touch operation ends, match the vehicle icon with one or more of an edge of the ground marking line in the top view and the driving area edge, where the ground marking line may be a roadside parking line, an edge line of a parking space, or the like. The driving area edge is a sideline of an area into which the to-be-parked vehicle can drive and a sideline of an area into which the to-be-parked vehicle cannot drive, such as an obstacle edge or a wall. Optionally, a matching method is: comparing the vehicle icon with the edge mark, an orientation of the driving area edge, and a center distance. When an included angle between a direction of the vehicle icon and an edge direction is less than a specified threshold, and a distance between a center position of the vehicle icon and the edge is less than a threshold, it is considered that matching succeeds. Information such as the parking area and the ground marking line may be obtained by using an image segmentation method, or may be obtained by using a line detection method. Optionally, the system adds a label to each pixel in the top view by using a machine learning method, to indicate that the pixel is the parking area, a marking line segment, an obstacle, or the like. Optionally, an edge line is identified by using a method such as a line detection method for conventional machine vision. In a parking scenario, the user tends to align the to-be-parked vehicle with the ground marking line or an edge of the obstacle. According to this principle, a matching result is obtained.

Further, the vehicle adjustment module is further configured to adaptively adjust the position and the orientation of the vehicle icon. Specifically, when the matching result actually exists, the orientation and the position of the vehicle icon are adaptively adjusted, so that the vehicle icon is aligned with the matching result. Through vibration feedback, a prompt tone indicates the user to adaptively adjust the vehicle icon. When the vehicle icon is not completely located in the driving area, an edge of the driving area is matched, and the vehicle icon is adjusted to the driving area. Optionally, the adaptive adjustment may use one or more of a plurality of policies: The orientation of the vehicle icon may be adaptively adjusted, so that the orientation of the vehicle icon is consistent with the matching result; the position of the vehicle icon may be adaptively adjusted, so that the vehicle icon is close to the matching result; and the position of the vehicle icon may be adaptively adjusted, so that the vehicle icon is located at a center of a plurality of matching results.

Further, the vehicle adjustment module is further configured to generate a virtual parking space based on a position and an orientation that are of the adaptively adjusted vehicle icon, where the virtual parking space corresponds to a real parking area (for example, a parking space) in an actual environment, and a position and an orientation that are of the real parking area are consistent with the virtual parking space.

The path planning module is configured to plan a path from a current position of the to-be-parked vehicle to a real parking space corresponding to the generated virtual parking space. The vehicle control module is configured to: control an execution device of the to-be-parked vehicle to implement the parking path planned by the path planning module, and control the to-be-parked vehicle to park in the selected parking space.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of this application.

**Claims**

1. An automated parking interaction method, comprising:

   receiving a parking instruction, and presenting a parking interaction interface in response to the parking instruction, wherein the parking interaction interface comprises a vehicle icon indicating a to-be-parked vehicle and a virtual parking space indicating an actually available parking space;
   detecting a touch operation performed on the parking interaction interface, wherein the touch operation enables the vehicle icon to move in the parking interaction interface;
   obtaining a position of the vehicle icon after the vehicle icon moves in the parking interaction interface;
   attaching the vehicle icon to a target virtual parking space based on the position of the moved vehicle icon, so that the vehicle icon matches the target virtual parking space, wherein the target virtual parking space is a virtual parking space that is in the parking interaction interface and whose position relationship with the moved vehicle icon meets a preset condition; and
   generating a parking response instruction, so that an automated parking system controls the to-be-parked vehicle to drive into an actually available parking space indicated by the target virtual parking space.

2. The method according to claim 1, wherein the detecting a touch operation performed on the parking interaction interface comprises:
   detecting a dragging operation performed on the vehicle icon, wherein the vehicle icon moves in the parking interaction interface with the dragging operation.

3. The method according to claim 1, wherein the detecting a touch operation performed on the parking interaction interface comprises:
   detecting a tapping operation performed on the parking interaction interface, and moving the vehicle icon to a tapped position of the tapping operation in the parking interaction interface.

4. The method according to any one of claims 1 to 3, after the attaching the vehicle icon to a target virtual parking space based on the position of the moved vehicle icon, further comprising:
   receiving a vehicle head orientation adjustment instruction, and adjusting a vehicle head orientation of the vehicle icon in the target virtual parking space according to the vehicle head orientation adjustment instruction.

5. The method according to claim 4, wherein the receiving a vehicle head orientation adjustment instruction comprises:

detecting a rotation operation performed on the vehicle icon, wherein the vehicle icon rotates in the parking interaction interface with the rotation operation;

obtaining a vehicle posture obtained after the vehicle icon rotates in the parking interaction interface; and adjusting the vehicle head orientation of the vehicle icon in the target virtual parking space based on the vehicle posture.

6. The method according to any one of claims 1 to 5, wherein that the vehicle icon matches the target virtual parking space indicates that a central point of the vehicle icon overlaps a central point of the target virtual parking space, and an outline sideline of the vehicle icon is parallel to an outline sideline of the corresponding target virtual parking space.

7. The method according to any one of claims 1 to 6, wherein an initial position of the vehicle icon in the parking interaction interface is a preset position, or an initial position of the vehicle icon in the parking interaction interface corresponds to an initial geographical position of the to-be-parked vehicle in an actual environment.

8. The method according to any one of claims 1 to 7, wherein a position of the target virtual parking space in the parking interaction interface is a preset position, or a position of the target virtual parking space in the parking interaction interface corresponds to a geographical position, in the actual environment, of the actually available parking space indicated by the virtual parking space.

9. The method according to any one of claims 1 to 8, wherein the parking interaction interface further comprises parameter information of the actually available parking space indicated by the virtual parking space.

10. The method according to any one of claims 1 to 9, wherein the parking interaction interface further comprises a non-parking area, and the non-parking area is used to indicate an actual geographical area that is not suitable for parking of the to-be-parked vehicle or in which the to-be-parked vehicle cannot be parked in the actual environment.

11. The method according to any one of claims 1 to 10, before the generating a parking response instruction, further comprising:

if the actually available parking space indicated by the target virtual parking space is not suitable for parking of the to-be-parked vehicle, indicating a user to re-select the target virtual parking space.

12. The method according to claim 11, before the indicating a user to re-select the target virtual parking space, further comprising:

determining, based on a size of the vehicle icon and a size of the target virtual parking space, whether the actually available parking space indicated by the target virtual parking space is suitable for parking of the to-be-parked vehicle.

13. The method according to claim 11, before the indicating a user to re-select the target virtual parking space, further comprising:

determining, based on a size of the to-be-parked vehicle and a size of the actually available parking space indicated by the target virtual parking space, whether the actually available parking space indicated by the target virtual parking space is suitable for parking of the to-be-parked vehicle.

14. The method according to any one of claims 1 to 13, wherein the actually available parking space indicated by the virtual parking space comprised in the parking interaction interface is a parking space obtained after a parking area in the actual environment is divided by the automated parking system.

15. An automated parking interaction apparatus, wherein the automated parking interaction apparatus comprises a receiving module, a display module, a touch detection module, an attaching and adjustment module, and a sending module;

the receiving module is configured to receive a parking instruction;
the display module is configured to present a parking interaction interface in response to the parking instruction, wherein the parking interaction interface comprises a vehicle icon indicating a to-be-parked vehicle and a virtual parking space indicating an actually available parking space;
the touch detection module is configured to: detect a touch operation performed on the parking interaction interface, wherein the touch operation enables the vehicle icon to move in the parking interaction interface; and obtain a position of the vehicle icon after the vehicle icon moves in the parking interaction interface;

the attaching and adjustment module is configured to attach the vehicle icon to a target virtual parking space based on the position of the moved vehicle icon, so that the vehicle icon matches the target virtual parking space, wherein the target virtual parking space is a virtual parking space that is in the parking interaction interface and whose position relationship with the moved vehicle icon meets a preset condition; and

the sending module is configured to: generate a parking response instruction, and send the parking response instruction to an automated parking system, so that the automated parking system controls the to-be-parked vehicle to drive into an actually available parking space indicated by the target virtual parking space.

16. The automated parking interaction apparatus according to claim 15, wherein the touch detection module is further configured to: detect a rotation operation performed on the vehicle icon, wherein the vehicle icon rotates in the parking interaction interface with the rotation operation; and obtain a vehicle posture obtained after the vehicle icon rotates in the parking interaction interface; and

the attaching and adjustment module is further configured to adjust a vehicle head orientation of the vehicle icon in the target virtual parking space based on the vehicle posture.

17. The automated parking interaction apparatus according to claim 15 or 16, further comprising a prompt module, wherein

the prompt module is configured to: if the actually available parking space indicated by the target virtual parking space is not suitable for parking of the to-be-parked vehicle, indicate a user to re-select the target virtual parking space.

18. The automated parking interaction apparatus according to claim 17, wherein the prompt module is further configured to determine, based on a size of the vehicle icon and a size of the target virtual parking space, whether the actually available parking space indicated by the target virtual parking space is suitable for parking of the to-be-parked vehicle.

19. The automated parking interaction apparatus according to claim 17, wherein the prompt module is further configured to determine, based on a size of the to-be-parked vehicle and a size of the actually available parking space indicated by the target virtual parking space, whether the actually available parking space indicated by the target virtual parking space is suitable for parking of the to-be-parked vehicle.

20. The automated parking interaction apparatus according to any one of claims 15 to 19, wherein that the vehicle icon matches the target virtual parking space indicates that a central point of the vehicle icon overlaps a central point of the target virtual parking space, and an outline sideline of the vehicle icon is parallel to an outline sideline of the corresponding target virtual parking space.

21. The automated parking interaction apparatus according to any one of claims 15 to 20, wherein an initial position of the vehicle icon in the parking interaction interface is a preset position, or an initial position of the vehicle icon in the parking interaction interface corresponds to an initial geographical position of the to-be-parked vehicle in an actual environment.

22. The automated parking interaction apparatus according to any one of claims 15 to 21, wherein a position of the target virtual parking space in the parking interaction interface is a preset position, or a position of the target virtual parking space in the parking interaction interface corresponds to a geographical position, in the actual environment, of the actually available parking space indicated by the virtual parking space.

23. The automated parking interaction apparatus according to any one of claims 15 to 22, wherein the parking interaction interface further comprises parameter information of the actually available parking space indicated by the virtual parking space.

24. The automated parking interaction apparatus according to any one of claims 15 to 23, wherein the parking interaction interface further comprises a non-parking area, and the non-parking area is used to indicate an actual geographical area that is not suitable for parking of the to-be-parked vehicle or in which the to-be-parked vehicle cannot be parked in the actual environment.

25. The automated parking interaction apparatus according to any one of claims 15 to 24, wherein the actually available parking space indicated by the virtual parking space comprised in the parking interaction interface is a parking space obtained after a parking area in the actual environment is divided by the automated parking system.

26. An automated parking interaction apparatus, comprising a processor and a memory, wherein the memory stores instructions, and when the instructions stored in the memory are invoked by the processor, the method according to any one of claims 1 to 14 is performed.

27. An automated parking system, wherein the automated parking system comprises the automated parking interaction apparatus according to any one of claims 15 to 25 or the automated parking interaction apparatus according to claim 26.

28. The automated parking system according to claim 27, wherein the automated parking system further comprises a parking computing module and a control module;

the automated parking interaction apparatus is specifically configured to send a parking response instruction to the parking computing module, wherein the parking response instruction comprises information about a target virtual parking space;

the parking computing module is configured to: receive the parking response instruction, obtain, according to the parking response instruction, an actually available parking space indicated by the target virtual parking space, and plan a parking path from a current position of a to-be-parked vehicle to the actually available parking space indicated by the target virtual parking space; and

the control module is configured to control, based on the parking path, the to-be-parked vehicle to park in the actually available parking space indicated by the target virtual parking space.

29. A vehicle, wherein the vehicle comprises the automated parking interaction apparatus according to any one of claims 15 to 25, the automated parking interaction apparatus according to claim 26, or the automated parking system according to claim 27 or 28.

Automated parking system <u>100</u>

| | | |
|---|---|---|
| Sensing module<br><u>140</u> | Parking computing<br>module <u>110</u> | Control module<br><u>130</u> |

| |
|---|
| Parking interaction<br>device<br><u>120</u> |

FIG. 1

Automated parking interaction method <u>100</u>

| | |
|---|---|
| Receive a parking instruction, and present a parking interaction interface on a display screen in response to the parking instruction | S101 |

| | |
|---|---|
| Detect a touch operation on a touch area that is on the display screen and that corresponds to the parking interaction interface, where the touch operation enables the vehicle icon to move in the parking interaction interface | S102 |

| | |
|---|---|
| Obtain a position of the vehicle icon after the vehicle icon moves in the parking interaction interface | S103 |

| | |
|---|---|
| Attach the vehicle icon to a target virtual parking space in the parking interaction interface based on the position of the moved vehicle icon | S104 |

| | |
|---|---|
| Generate a parking response instruction | S105 |

FIG. 2

Virtual parking
space

Parking
interaction
interface

Actual
environment

Actual
parking space

Preset display
area 1

Non-parking
area

To-be-parked
vehicle

Vehicle icon

Preset display
area 2

FIG. 3 (a)

FIG. 3 (b)

Virtual
parking space

Parking
interaction
interface

Actual
parking
space

Actual
environment

Vehicle
icon

Non-parking
area

To-be-parked
vehicle

Virtual
parking space

FIG. 4 (a)

FIG. 4 (b)

FIG. 5

Virtual parking
space

Vehicle icon

Preset display
area 1

Preset display
area 2

FIG. 6

FIG. 7 (a)

FIG. 7 (b)

Inner side

Vehicle icon

Target virtual parking space

Outer side

FIG. 8 (a)

Inner side

Vehicle icon

Target virtual parking space

α  Outer side

FIG. 8 (b)

Inner side

Vehicle icon

Target virtual parking space

Outer side

FIG. 8 (c)

Automated parking interaction apparatus
100

Receiving module 101

Display module 102

Touch detection module 103

Attaching and adjustment module 104

Sending module 105

Prompt module 106

FIG. 9

Automated parking interaction apparatus 200

Memory 201

Processor 202

Bus 204

Communications interface 203

FIG. 10

Automated parking method 200

Receive an automated parking instruction of a user — S201

Obtain environment data in a preset range around a to-be-parked vehicle — S202

Obtain data of an actually available parking space based on the environment data — S203

Present a parking interaction interface on a display screen in response to the automated parking instruction — S204

Detect a dragging operation in a touch area that is on the display screen and that corresponds to the vehicle icon, and obtain a position of the vehicle icon after the vehicle icon moves in the parking interaction interface — S205

TO
FIG. 11B

FIG. 11A

CONT.
FROM
FIG. 11A

S211

Receive a vehicle head orientation adjustment instruction, and adjust a vehicle head orientation of the vehicle icon in the target virtual parking space according to the vehicle head orientation adjustment instruction

S206

Attach the vehicle icon to a target virtual parking space based on the position of the moved vehicle icon

S212

Determine whether an actually available parking space indicated by the target virtual parking space is suitable for parking of the to-be-parked vehicle, and if the actually available parking space indicated by the target virtual parking space is not suitable for parking of the to-be-parked vehicle, indicate the user to re-select the target virtual parking space

Generate a parking response instruction — S207

Determine a target parking space based on information about the target virtual parking space, and obtain data of the target parking space — S208

Determine a parking path based on the data of the target parking space and data of the to-be-parked vehicle — S209

Control, based on the parking path, the to-be-parked vehicle to drive into the target parking space — S210

FIG. 11B

FIG. 12

**EP 4 049 908 A1**

## INTERNATIONAL SEARCH REPORT

| International application No. |
|---|
| **PCT/CN2020/103389** |

**A.   CLASSIFICATION OF SUBJECT MATTER**

B60W 30/06(2006.01)i;   B60W 50/08(2020.01)i

According to International Patent Classification (IPC) or to both national classification and IPC

**B.   FIELDS SEARCHED**

Minimum documentation searched (classification system followed by classification symbols)

b60w; b60r

Documentation searched other than minimum documentation to the extent that such documents are included in the fields searched

Electronic data base consulted during the international search (name of data base and, where practicable, search terms used)

CNPAT/CNKI/WPI/EPODOC: 华为, 高常宇, 沈玉杰, 袁峻, 图标, 虚拟停车位, 吸附, 吻合, 停车位, 自动, 智能, 交互, 选择, parking, screen, display, interactive, dummy, auto+, adjust+, select+, regulat+, virtual

**C.   DOCUMENTS CONSIDERED TO BE RELEVANT**

| Category* | Citation of document, with indication, where appropriate, of the relevant passages | Relevant to claim No. |
|---|---|---|
| X | CN 109278744 A (GUANGZHOU XIAOPENG MOTORS TECHNOLOGY COMPANY LTD.) 29 January 2019 (2019-01-29) claims, description, background art, embodiments 2-5, figures 2-7 | 1-29 |
| A | CN 109493632 A (GUANGZHOU XIAOPENG MOTORS TECHNOLOGY CO., LTD.) 19 March 2019 (2019-03-19) entire document | 1-29 |
| A | CN 110239524 A (ZHEJIANG GEELY HOLDING GROUP et al.) 17 September 2019 (2019-09-17) entire document | 1-29 |
| A | CN 109466545 A (GUANGZHOU XIAOPENG MOTORS TECHNOLOGY CO., LTD.) 15 March 2019 (2019-03-15) entire document | 1-29 |
| A | CN 109138561 A (ZONGMU TECHNOLOGY (SHANGHAI) LIMITED COMPANY) 04 January 2019 (2019-01-04) entire document | 1-29 |
| A | JP 2019172208 A (PANASONIC IP MANAGEMENT CORP.) 10 October 2019 (2019-10-10) entire document | 1-29 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2020** | **29 October 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/103389**

**C.        DOCUMENTS CONSIDERED TO BE RELEVANT**

| Category* | Citation of document, with indication, where appropriate, of the relevant passages | Relevant to claim No. |
|---|---|---|
| A | US 2017043766 A1 (HYUNDAI MOTOR CO., LTD.) 16 February 2017 (2017-02-16)<br>entire document | 1-29 |
| A | JP 2019188934 A (CLARION CO., LTD.) 31 October 2019 (2019-10-31)<br>entire document | 1-29 |

Form PCT/ISA/210 (second sheet) (January 2015)

**INTERNATIONAL SEARCH REPORT**
Information on patent family members

International application No.

**PCT/CN2020/103389**

| Patent document cited in search report | | | Publication date (day/month/year) | Patent family member(s) | | | Publication date (day/month/year) |
|---|---|---|---|---|---|---|---|
| CN | 109278744 | A | 29 January 2019 | CN | 109278744 | B | 07 July 2020 |
| | | | | WO | 2020082775 | A1 | 30 April 2020 |
| CN | 109493632 | A | 19 March 2019 | WO | 2020098287 | A1 | 22 May 2020 |
| CN | 110239524 | A | 17 September 2019 | | None | | |
| CN | 109466545 | A | 15 March 2019 | | None | | |
| CN | 109138561 | A | 04 January 2019 | | None | | |
| JP | 2019172208 | A | 10 October 2019 | | None | | |
| US | 2017043766 | A1 | 16 February 2017 | US | 9738277 | B2 | 22 August 2017 |
| | | | | KR | 101704244 | B1 | 22 February 2017 |
| JP | 2019188934 | A | 31 October 2019 | | None | | |

Form PCT/ISA/210 (patent family annex) (January 2015)